# EUROPÄISCHE PATENTSCHRIFT

(11) **EP 0 551 245 B1**
(45) Veröffentlichungstag und Bekanntmachung des Hinweises auf die Patenterteilung: **11.09.1996**
(21) Anmeldenummer: 93810081.5
(22) Anmeldetag: 10.02.1993
(51) Int. Cl.: B01D 61/14, C12H 1/04, C12H 1/06, C12N 15/12, A61K 39/00, G01N 33/577

(54) **Verfahren zur Filtration verschmutzter Lauge und Anlage zur Durchführung des Verfahrens**
Process for the filtration of polluted lye and apparatus for implementing this process
Procédé de filtration de lessives polluées et installation pour mettre en oeuvre ce procédé

(30) Priorität: 06.03.1992 CH 734/92
(43) Veröffentlichungstag der Anmeldung: 14.07.1993
(73) Patentinhaber: Filtrox-Werk AG, CH-9001 St. Gallen (CH)
(72) Erfinder: Kiefer, Johannes, Dr., CH-9032 Engelburg (CH); Girr, Manfred, CH-9032 Engelburg (CH)
(74) Vertreter: Hepp, Dieter

(56) Entgegenhaltungen:
- EP-A- 0 351 363
- EP-A- 0 388 628
- BREWERS' GUARDIAN Juli 1986, Seiten 15 - 18 R. J. R. REED ET AL. 'CROSS-FLOW FILTRATION IN BREWING'
- Aachener Membran Kolloquium, 19.-21.3.91, Preprints, GVD VDI-Gesellschaft Verfahrenstechnuk und Chemieingenieurwesen, 1991 Düsseldorf (DE), Seiten 1, 366, 367, 438 - 449

## Beschreibung

Die Erfindung betrifft ein Verfahren zum Reinigen von Lauge, die bei einem Reinigungsprozess und/oder einem Regenerationsprozess in einem Lebensmittel-Bearbeitungs- oder Abfüllverfahren mit organischen und polyphenolischen Verbindungen belastet wurde. Weiterhin betrifft die Erfindung ein Verfahren und eine Anlage zur Regenerierung von Polyvinylpolypyrrolidon (PVPP) mit Lauge und die Reinigung dieser Lauge von organischen und polyphenolischen Verbindungen.

Unter Lebensmittel-Bearbeitungs- oder Abfüllverfahren im vorstehend genannten Sinn sind alle Verfahren zu verstehen, bei denen Lebensmittel in beliebiger Konsistenz hergestellt, verarbeitet, abgefüllt oder anderweitig bearbeitet werden und wobei organische und/oder polyphenolische Verbindungen entfernt werden müssen.

So fallen z.B. beim Lagern, Transportieren, Abfüllen oder Filtern verschiedener Getränke organische und/oder polyphenolische Abfallstoffe an. Diese finden sich z.B. in Anlageelementen, an Behälterwandungen, in Gefässen, in Filtern oder Filterhilfsmitteln, oder gebunden an Stabilisierungsmittel. Diese Stoffe werden häufig mittels Lauge gelöst und entfernt.

So wird z.B. Polyvinylpolypyrrolidon (PVPP) als Stabilisierungsmittel bei der Herstellung von Bier eingesetzt. Während dieses Einsatzes werden phenolische Bestandteile des Bieres am PVPP angelagert. Dieser Prozess dient der Erhöhung der Haltbarkeit des Bieres. Um einen möglichst rationellen Einsatz des sehr teuren PVPP's zu gewährleisten, wird das mit Polyphenolen beladene PVPP einem Regenerierprozess zugeführt, der beim Stand der Technik folgendermassen abläuft: zunächst wird der während der Stabilisierung in einem Filter zurückgehaltene haltene PVPP-Kuchen mit warmem oder kaltem Wasser gespült. Dies dient der Beseitigung noch vorhandener Bierreste. Nach diesem Spülprozess wird in einer Kreislaufschaltung unter Einpumpen von Natronlauge bis zu einer Endkonzentration von 1 - 2 % das PVPP regeneriert. Der Regenerationsprozess läuft bei ca. 40°C - 80°C ab. Nachdem die phenolischen Substanzen vom PVPP abgelöst wurden, wird die Natronlauge, die erheblich verschmutzt ist, mit frischem Wasser verdrängt. Nach Wiederherstellen der Kreislaufschaltung erfolgt eine Zudosage von Säure, z.B. Salpetersäure, Phosphorsäure oder Zitronensäure. Diese Zudosage von Säure dient der Neutralisation der PVPP-Lösung. Mit diesem leicht angesäuerten Wasser erfolgt eine Heisswassersterilisation der Anlage. Nach Ende des Sterilisationsprozesses steht die Stabilisieranlage für einen weiteren Einsatz zur Verfügung.

Die EP 351 363 A1 zeigt z.B. ein Verfahren zur Filtration und Stabilisierung eines Gerbstoffe und/oder Eiweissstoffe enthaltenden flüssigen Mediums. Dabei wird das Unfiltrat durch Crossflow-Membranfiltration im Ultra- oder Mikrofiltrationsbereich in Anwesenheit eines Stabilisierungsmittels filtriert und stabilisiert. Das Stabilisierungsmittel wird nach Beendigung eines Filtrations-Zyklus, beispielsweise mittels Heisslauge, in der Anlage selbst gereinigt und regeneriert. Das Stabilisierungsmittel kann direkt im Filter regeneriert werden oder zur Regenerierung in den Arbeitstank zurückgeführt werden. Die Regenerierungsflüssigkeit (beispielsweise die Heisslauge) wird nach der Regenerierung zusammen mit den Trubstoffen aus der Anlage abgeführt.

Die anfallende Ablauge unterliegt den jeweiligen gesetzlichen Vorschriften der Entsorgung. In sehr geringem Mass kann ein Einsatz für andere Zwecke in einem Getränkeindustriebetrieb erfolgen.

Aufgrund der Einleitungsbestimmungen von Abwasser muss diese Ablauge in der Regel einem Neutralisationsschritt unterworfen werden. Dabei werden gewisse Mengen von Mineralsalzen erzeugt, je nach der Art der zur Neutralisation verwendeten Säure.

Folgende Mengenbilanz kann für einen Brauereibetrieb mit einer Jahresproduktion von 1'000'000 hl bei der Verwendung dieses Verfahrens angenommen werden:

Zu stabilisierende Jahresmenge: 1'000'000 hl. Eine typische Dosagemenge sind ca. 30 g PVPP/hl Bier. Dies ergibt eine Gesamteinsatzmenge von ca. 30'000 kg/Jahr. Eine dieser Jahresproduktion angemessene PVPP-Stabilisierungsanlage hat ein Fassungsvermögen von etwa 275 kg PVPP. Es kann aufgrund der in der Regel vorhandenen Kopplung mit einer vorgeschalteten Filtration nur mit einer durchschnittlichen Ausnutzung von 80% bis zu einer erforderlichen Regeneration gerechnet werden. Dies ergibt pro Jahr etwa 120 Regenerationen. Der typische Systeminhalt einer solchen Anlage liegt bei etwa 70 hl. Damit fallen pro Jahr etwa 8'400 hl 2%-iger Lauge an. Dies ergibt eine Gesamtmenge von ca. 17 t Lauge pro Jahr. Die möglicherweise nötige Neutralisation erhöht die Salzfracht je nach verwendeter Säure. So wird bei Neutralisation mit Salzsäure eine Salzfracht (NaCl) von ca. 25 t/Jahr anfallen. Diese nicht unerheblichen Mengen belasten Vorfluter und Kläranlagen.

Auch zum Spülen von Rohrleitungen, Behältern, Fässern und dergleichen wird in der Lebensmittelindustrie in erheblichem Umfang Lauge verwendet.

Lauge wird auch z.B. noch zur Reinigung von Flaschen und anderen Transportbehältern eingesetzt.

Der Erfindung liegt die Aufgabe zugrunde die Nachteile des Bekannten zu vermeiden, insbesondere also ein Verfahren zur Reinigung von Lauge zu schaffen, das auf Neutralisierung, d.h. auf Erzeugung von Salzen ganz oder weitgehend verzichtet und bei einfachstem apparativem und verfahrenstechnischem Aufbau zuverlässige Reinigung und Regenerierung der Lauge ermöglicht. Die Erfindung weicht bereits bei der Aufgabenstellung vom Stand der Technik ab: Die zur Reinigung verwendete Lauge soll weder neutralisiert noch abgelassen, sondern gereinigt und damit wiederverwendbar gemacht werden.

Ueberraschenderweise hat sich nämlich gezeigt, dass die üblicherweise mit verschiedenen polyphenolischen Verbindungen, organischen Verbindungen und Schmutz- oder Hefepartikeln belastete Lauge sich durch Crossflow-Nanofiltration reinigen lässt.

Besonders gute Ergebnisse und vielfache Wiederverwendbarkeit der Lauge lassen sich erzielen, wenn die Lauge über Nanofiltrationsmembranen filtriert wird, die einen cut-off von 100 bis 2000, vorzugsweise von 200 bis 500 Dalton aufweisen.

Hohe Filtrationsleistungen ergeben sich vor allem bei stark verschmutzter Lauge, wenn diese vor der Nanofiltration über eine Mikrofiltrationsmembrane ebenfalls nach dem Crossflow-Prinzip vorfiltriert wird, wobei die Porenweite dieser Membranen 0,2 bis 100 µm, vorzugsweise 0,6 bis 1,5 µm beträgt.

Der Verfahrensablauf lässt sich besonders rationell gestalten, wenn das Permeat der Mikrofiltration direkt oder über einen Pufferbehälter in den Retentatraum der Anordnung zur Nanofiltration eingespeist wird.

Vor allem wenn das Unfiltrat stark mit Partikeln, Heferesten und dergleichen durchsetzt ist, lassen sich die Filtratzeiten und Filtratleistungen weiter erhöhen, wenn die Lauge mit einem statischen Sieb- oder Beutelfilter mit einer Porenweite von 1 bis 500 µm vorfiltriert wird.

Besonders vorteilhaft lässt sich eine kontinuierliche Aufkonzentrierung des Retentats erreichen, wenn das Retentat jeweils aus der Nanofiltration in einen Sammeltank zurückgeführt wird, in dem sich die zu filtrierende Lauge befindet.

Bei zweistufiger Crossflow-Filtration, bestehend aus Mikro- und Nanofilter, ist es vorteilhaft, wenn das Retentat sowohl aus der Mikrofiltration als auch das Retentat aus der Nanofiltration in den Sammeltank zurückgeführt wird, in dem sich die zu filtrierende Lauge befindet.

Alternativ kann es auch vorteilhaft sein, das Retentat aus der Vorfiltration und das Retentat aus der Nanofiltration während der Filtration kontinuierlich oder diskontinuierlich abzuführen.

Besonders gute Filtrationsergebnisse lassen sich erzielen, wenn die Natronlauge bei einer Temperatur von 10 bis 90°C, vorzugsweise bei einer erhöhten Temperatur zwischen 30° und 60°C filtriert wird.

Eine Filteranlage lässt sich nach der Laugenfiltration besonders einfach reinigen, wenn mit einer sauren Reinigungslösung gleichzeitig eine Neutralisation herbeigeführt wird. Ersichtlicherweise stehen die geringen Mengen an Säure bzw. an entstehenden Salzen in keinem Verhältnis zu den grossen Salzmengen, die beim Stand der Technik zur Neutralisierung der gesamten Laugenmenge erforderlich waren.

In gleicher Weise kann es vorteilhaft sein, das bei Filtrationsende zurückbleibende Retentat mit dem enthaltenen geringen Laugenanteil zu neutralisieren, wobei sich dazu besonders gut die zur Reinigung der Filteranlage verwendete saure Reinigungslösung eignet.

Durch die Reinigung der gebrauchten Natronlauge mit Hilfe eines geeigneten Filtrationsverfahrens ist die mehrfache Verwendung der Lauge möglich. Die zu beschaffende Laugenmenge kann dadurch ebenso deutlich vermindert werden, wie der Neutralisationsaufwand und die Abwasserbelastung infolge der Salzfracht.

Die Reinigung der Lauge aus dem PVPP-Verfahren kann sinnvollerweise in zwei Filtrationsschritten vorgenommen werden.

Im ersten Schritt wird die Lauge über eine Mikrofiltrationsmenbrane nach dem Crossflow-Prinzip filtriert, um Partikel und gröbere Verunreinigungen zu entfernen. Die Membrane kann Porenweiten von 0,2 bis 100 µm aufweisen, vorzugsweise von 0,6 bis 1,5 µm.

Im zweiten Schritt wird die vorfiltrierte Lauge durch eine Nanofiltration mit einem cut-off von 100 bis 2000 Dalton, vorzugsweise von 200 bis 500 Dalton von den polyphenolischen Verbindungen weitgehend befreit. Auch in diesem Schritt wird nach dem Crossflow-Prinzip verfahren.

Die Reinigung der Lauge aus einem PVPP-Verfahren wird in einer geeigneten Filteranlage vorgenommen. Die Filteranlage besteht aus einer oder zwei nach dem Crossflow-Prinzip arbeitenden Filtrationsstufen. Die erste Stufe der Anlage wird mit gebrauchter Lauge gespeist. Sie besteht aus einer Mikrofiltrationsmembrane, die in einem Modul installiert ist, aus einer Pumpe und einem Rohrleitungssystem, das einen Kreislauf bildet. Die eingespeiste Lauge wird mit der Pumpe im Kreislauf über die Membrane umgewälzt. Die von der filtrierenden Membrane zurückgehaltenen Teilchen werden im Kreislauf aufkonzentriert. Um die Konzentration im Kreislauf nicht stark ansteigen zu lassen, kann ein Teilstrom in den Lauge-Sammeltank zurückgeführt werden, was zu einer besseren Durchmischung führt.

Das in der ersten Stufe anfallende Permeat wird der zweiten Stufe zugeführt. Die zweite Stufe besteht aus einem Modul, in dem eine Nanofiltrationsmembrane installiert ist, aus einer Pumpe und einem Rohrleitungssystem. In dieser Stufe werden die polyphenolischen Verbindungen aus der Lauge weitgehend abgetrennt und im Kreislauf aufkonzentriert. Die filtrierte Lauge wird in einem Tank aufgefangen, von wo sie für eine erneute PVPP-Regenerierung entnommen wird.

Die am Ende der Filtration anfallende verschmutzte Retentatlösung aus den beiden Filterstufen, in der sich die abgetrennten Partikel und die polyphenolischen Verbindungen befinden, entspricht einem Volumen von 0,1 bis 10 % der filtrierten Laugenmenge. Dieses Konzentrat kann der Kläranlage neutralisiert und eventuell durch andere Betriebsabwässer verdünnt zugeführt werden.

In Versuchen im Labormassstab wurde gebrauchte Lauge aus dem PVPP-Verfahren mit einer Mikrofiltrationsmembrane von 0,4 µm Porenweite vorfiltriert und anschliessend mit 4 verschiedenen Nanofiltrationsmembranen nachfiltriert.

Die Nanofiltrationsmembrane 1 wird vom Hersteller durch folgende Eigenschaften charakterisiert:

| | |
|---|---|
| Rückhaltung von 5% NaCl: | 80 % |
| Rückhaltung von Zitronensäure (MG 192) | 90 % |
| Rückhaltung von Farbstoff Brilliant Green (MG 483) | 99.9% |
| Rückhaltung von Glucose (MG 180) | 96 % |

(MG steht für Molekulargewicht)

Mit dieser Membrane wurde der Gesamt-Polyphenolgehalt der Lauge nach der Vorfiltration von 183 mg/l auf 8 mg/l reduziert.

Die Nanofiltrationsmembrane 2 wird vom Hersteller durch folgende Eigenschaften charakterisiert:

| | |
|---|---|
| Rückhaltung von 5% NaCl: | 10 % |
| Rückhaltung von Zitronensäure (MG 192) | 85 % |
| Rückhaltung von Farbstoff Brilliant Green (MG 483) | 99.9% |
| Rückhaltung von Glucose (MG 180) | 75 % |

Mit dieser Membrane wurde der Gesamt-Polyphenolgehalt der Lauge nach der Vorfiltration von 183 mg/l auf 31 mg/l reduziert.

Die Nanofiltrationsmembrane 3 wird vom Hersteller durch folgende Eigenschaften charakterisiert:

| | |
|---|---|
| Rückhaltung von 5% NaCl: | 25% |
| Rückhaltung von Zitronensäure (MG 192) | 58% |
| Rückhaltung von Farbstoff Brilliant Green (MG 483) | 97% |
| Rückhaltung von Glucose (MG 180) | 85% |

Mit dieser Membrane wurde der Gesamt-Polyphenolgehalt der Lauge nach der Vorfiltration von 183 mg/l auf 15 mg/l reduziert.

Für die Nanofiltrationsmembrane 4 gibt der Hersteller eine Trenngrenze von MG 5000 an.

Mit dieser Membrane wurde der Gesamt-Polyphenolgehalt der Lauge nach der Vorfiltration von 183 mg/l auf 40 mg/l reduziert.

Die als Permeat gewonnene Lauge kann nach der Aufschärfung auf den erforderlichen Wert wieder für die Regenerierung des PVPP verwendet werden.Eine Wirkungsminderung konnte in Regenerierversuchen nicht festgestellt werden, damit kann das Verfahren in der Praxis eingesetzt werden.

In einem weiteren Versuch wurde Lauge behandelt, die zur Reinigung von Tanks eingesetzt worden war, in denen Gärungsprozesse wie z.B. in Brauereien, ablaufen. Dabei wird die Lauge mit Gärungsrückständen wie z.B. Hefe, ausgeschiedenen Hopfenharzen, Eiweisstoffen etc. beladen, und muss nach 1-bis 2-wöchigem Einsatz ausgetauscht werden.

Lauge wird weiterhin eingesetzt zur Flaschenreinigung in speziellen Reinigungsmaschinen mit mehrstufiger Laugebehandlung. Anfallende Etikettenreste und organische Verschmutzungen werden periodisch durch Sedimentation des ersten Laugenbades entfernt. Dieser Schritt kann kontinuierlich durch eine Filtration der beschriebenen Art erfolgen. Damit kann eine konstante Laugequalität bei gleichzeitigen erhebliche Einsparungen an Arbeitszeit und Sedimentationseinrichtungen erzielt werden.

Eine besonders vorteilhafte Ausführungsvariante der Erfindung, bei der die Lauge im Crossflow-Filter einer Getränke-Filtrationsanlage gefiltert wird, ist anhand der Zeichnungen näher erläutert. Es zeigen:
- Figur 1: ein schematisches Fliess-Schema einer Filtrationsanlage mit den Merkmalen der Erfindung, und
- Figur 2: ein abgewandeltes Ausführungsbeispiel der Filtrationsanlage gemäss Figur 1.

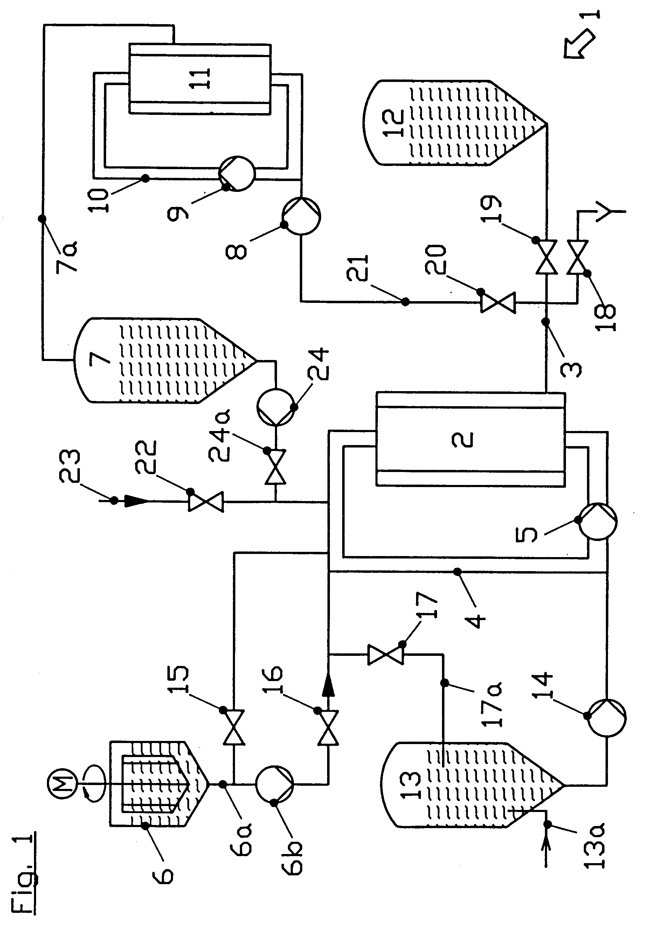

Gemäss Figur 1 weist eine Filtrations-Anlage 1 ein Crossflow-Filter 2 auf, dessen Ausgang durch eine Rückführleitung 4 mit einer Pumpe 5 mit dem Filter-Eingang verbunden ist. Ein Arbeitstank 13, der über die Leitung 13a befüllt werden kann, ist über eine Pumpe 14 mit der Rückführleitung 4 verbunden. Ein zu filtrierendes Medium, im vorliegenden Fall Bier, wird über diese Verbindung dem Filter 2 zugeführt. Im Batch-Prozess wird über Ventil 17 und Leitung 17a ein Teilstrom aus Leitung 4 in den Arbeitstank 13 zurückgeführt, was zur Durchmischung des Tankinhaltes und zur Verteilung der Trubbestandteile auf ein grösseres Medienvolumen führt. Dadurch kann eine höhere Durchschnittsleistung von Filter 2 erzielt werden. Das im Filter 2 anfallende Filtrat wird über eine Leitung 3 und ein Ventil 19 einem Puffertank 12 zugeführt. Trubstoffe, im vorliegenden Fall beispielsweise Hefe, bleiben als Retentatbestandteile bis zum Ende der Filtration im Unfiltratraum, der aus Arbeitstank 13 und den daran angeschlossenen Leitungen sowie Filter 2 und Rückführleitung 4 besteht. Ein Dosierbehälter 6 zur Dosage von Stabilisierungsmitteln, insbesondere von PVPP, ist durch eine Leitung 6a mit Pumpe 6b und Ventil 16 an die Rückführleitung 17a angeschlossen, dies ermöglicht die Dosierung in den Teilstrom, der in den Arbeitstank 13 zurückgeführt wird, mit dem Vorteil einer verlängerten Kontaktzeit. Ausserdem ist die Dosierung direkt in Leitung 4 möglich, wenn bei geschlossenem Ventil 17 ohne Rückführung gearbeitet wird. Die Rückführleitung 4 ist über ein Ventil 22 mit einer Zuführleitung 23 verbunden, durch welche Wasser oder Reinigungsflüssigkeit von nicht dargestellten Zufuhreinrichtungen in die Rückführleitung 4 und das Filter 2 eingebracht werden kann.

Nach Abschluss des Filtrationszyklus ist das Filtrat im Puffertank 12 gesammelt. Im Filter 2, Rückführleitung 4 und Arbeitstank 13 befinden sich noch Trubstoffe und belastetes PVPP. Zunächst kann über Leitung 23 eine Spülflüssigkeit, vorzugsweise Wasser, zugeführt werden und Reste des Mediums, das filtriert wurde, verdünnt und auf der Filtratseite über Leitung 3 und Ventil 18 abgeleitet werden. Nach der Spülung kann Ventil 24a geöffnet werden und mit Pumpe 24 Lauge aus einem Lauge-Tank 7 in den Unfiltratraum, also Tank 13, Filter 2, Rückführleitung 4 und die Verbindungsleitungen zum Arbeitstank geleitet werden. Die Lauge löst die Schmutzstoffe und reinigt bzw. regeneriert das PVPP im Unfiltratraum. Die Lauge kann dabei im Crossflow-Verfahren mittels der Pumpen 14 und 5 über das Filter 2, Rückführleitung 4 und den Arbeitstank 13 umgewälzt werden. Danach kann durch Öffnen des Ventils 20 die Lauge filtratseitig aus dem Crossflow-Filter 2 abgezogen werden, wobei auch die mit Hilfe der Lauge gelösten Schmutzstoffe und organische und polyphenolische Verbindungen entfernt werden, das PVPP wird vom Crossflow-Filter 2 dagegen zurückgehalten. Ueber Leitung 21 und eine Speisepumpe 8, eine Umwälzpumpe 9 mit Rückführleitung 10 und Crossflow-Nanofilter 11 wird die im Crossflow-Filter 2 quasi vorfiltrierte Lauge im Crossflow-Nanofilter 11 regeneriert, wobei nicht nur gelöste Schmutzstoffe, sondern auch organische und polyphenolische Verbindungen von der Lauge getrennt werden. Aus dem Crossflow-Nanofilter 11 wird die regenerierte Lauge über Leitung 7a dem Lauge-Tank 7 zurückgeführt. Das im Crossflow-Nanofilter 11 zurückgeführte Retentat kann dann auf bekannte Weise über nicht dargestellte Leitungen abgeführt werden, auch seine Reinigung geschieht mit Hilfe von nicht dargestellten Leitungen auf bekannte Weise. Das im Unfiltratraum von Crossflow-Filter 2, den zugehörigen Leitungen und Tank 13 zurückgebliebene regenerierte und gereinigte PVPP wird anschliessend gespült und über Ventil 15 wieder dem Dosierbehälter 6 zugeführt.

Die beschriebene Nanofiltrationsmembran 2 wurde auch verwendet zur Reinigung verschmutzter Gärkellerlauge. Diese Lauge wurde vorfiltriert über eine Mikrofiltrationsmembran mit 0.9 µm Porenweite.

Als kennzeichnender Indikator für die Verschmutzung wurde der chemische Sauerstoffbedarf ( CSB ) verwendet, eine Grösse aus der Abwassertechnik.

Der CSB-Wert im Permeat, dem Ablauf der Nanofiltrationsanlage betrug 883 mg O2/l Liter, der CSB-Wert im Konzentrat 13'200 mg O2/l. Die organische Verschmutzung kann damit in einem Verhältnis von ca. 1 : 15 abgetrennt werden.

Ein weiterer Vorteil der Anwendung des Verfahrens liegt in der Verschiebung des Verhältnisses der reinigungsaktiven zu reinigungsinaktiven Substanzen. Als reinigungsaktiv ist in diesem Zusammenhang Natriumhydroxid zu verstehen, als reinigungsinaktiv Natriumcarbonat. Im Permeat, der wiederverwendbaren Fraktion, besteht ein Verhältnis von NaOH zu Na2CO3 von etwa 3:1, im Konzentrat ein solches von 1:4. Im Konzentrat erfolgt somit eine Anreicherung nicht reinigungsaktiver Ionen, ein durchaus erwünschter Vorgang.

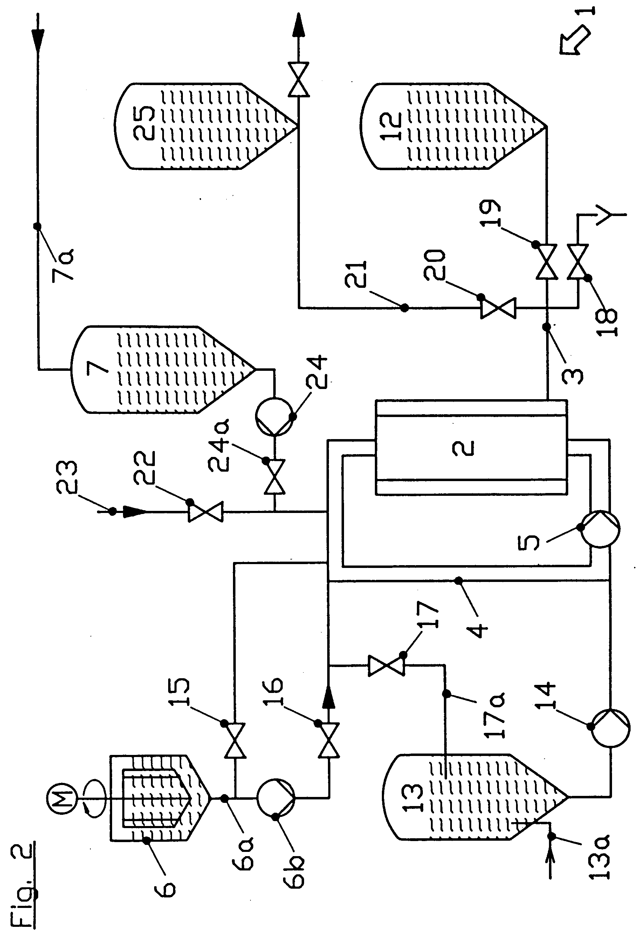

Das Ausführungsbeispiel gemäss Figur 2 entspricht im wesentlichen dem Ausführungsbeispiel gemäss Figur 1. Dabei wird lediglich die im Filter 2 vorgefilterte Lauge einem Behälter 25 zugeführt. Aus dem Behälter kann die Lauge abgeführt, auf erfindungsgemässe Weise von organischen und polyphenolischen Verbindungen getrennt und sodann wieder dem Behälter 7 zugeführt werden.

Auf die in den Ausführungsbeispielen beschriebene Weise lässt sich also die Crossflow-Filtrationsanlage zum Filtrieren eines Mediums besonders vorteilhaft selbst zum Regenerieren von PVPP oder anderen Stabilisierungsmitteln und/oder zum Vorfiltern/Regenerieren der Lauge verwenden, die zum Reinigen des PVPP eingesetzt wurde. Selbstverständlich ist aber die Erfindung an keine solche konkrete Ausgestaltung der Anlage gebunden.

Lauge lässt sich auch nur durch separat angeordnete Crossflow-Nanofilter in der eingangs beschriebenen Weise regenerieren.

## Patentansprüche

1. Verfahren zum Reinigen von Lauge, die bei einem Reinigungs- und/oder Regenerationsprozess in einem Lebensmittel-Bearbeitungs- oder Abfüllverfahren mit organischen und/oder polyphenolischen Verbindungen belastet wurde, wobei die Lauge im Crossflow-Nanofiltrations-Verfahren mit einem cut-off von 100 bis 2000, vorzugsweise von 200 bis 500 Dalton filtriert wird und dabei Partikel, organische und polyphenolische Verbindungen weitgehend von der Lauge getrennt werden.

2. Verfahren nach Anspruch 1, dadurch gekennzeichnet, dass die Lauge vor der Nanofiltration über eine Mikrofiltrationsmembrane nach dem Crossflow-Prinzip vorfiltriert wird, deren Porenweite 0,2 bis 100 µm, vorzugsweise 0,6 bis 1,5 µm beträgt.

3. Verfahren nach Anspruch 2, dadurch gekennzeichnet, dass das Permeat der Mikrofiltration direkt in den Retentatraum der Nanofiltration eingespeist wird.

4. Verfahren nach einem der vorangegangenen Ansprüche, dadurch gekennzeichnet, dass die Lauge mit einem statischen Sieb- oder Beutelfilter mit einer Porenweite von 1 bis 500 µm vorfiltriert wird.

5. Verfahren nach einem der vorangegangenen Ansprüche, dadurch gekennzeichnet, dass das Retentat aus der Nanofiltration in einen Sammeltank zurückgeführt wird, in dem sich die zu filtrierende Lauge befindet.

6. Verfahren nach einem der Ansprüche 2 oder 3, dadurch gekennzeichnet, dass das Retentat aus der Mikrofiltration und das Retentat aus der Nanofiltration in einen Sammeltank zurückgeführt werden, in dem sich die zu filtrierende Lauge befindet.

7. Verfahren nach einem der Ansprüche 2 oder 3, dadurch gekennzeichnet, dass das Retentat aus der Vorfiltration und das Retentat aus der Nanofiltration während der Filtration kontinuierlich oder diskontinuierlich getrennt abgeführt werden.

8. Verfahren nach einem der vorangegangenen Ansprüche, dadurch gekennzeichnet, dass die Natronlauge bei einer Temperatur von 10 bis 90° C filtriert wird, vorzugsweise zwischen 30 und 60° C.

9. Verfahren nach einem der Ansprüche 1 bis 8, dadurch gekennzeichnet, dass die Filteranlage und insbesondere die Membranen nach der Laugenfiltration vorzugsweise mit einer sauren Reinigungslösung gereinigt werden.

10. Verfahren nach Anspruch 9, dadurch gekennzeichnet, dass die saure Reinigungslösung nach beendeter Reinigung zur Neutralisierung der im Retentat zurückbleibenden Alkalität verwendet wird.

11. Verfahren nach Anspruch 1, dadurch gekennzeichnet, dass die besagte Lauge beim zyklischen Regenerieren von mit organischen und polyphenolischen Verbindungen belastetem Polyvinylpolypyrrolidon (PVPP), das beim Stabilisieren und Filtrieren eines Getränks, insbesondere von Bier und Fruchtsaft verwendet wird, anfällt.

12. Verfahren gemäss Anspruch 11, dadurch gekennzeichnet, dass das Stabilisierungsmittel in einer Crossflow-Anlage durch Lauge gereinigt und regeneriert wird und dass die belastete Lauge durch Crossflow-Filtration während oder nach der Reinigung des Stabilisierungsmittels vorgefiltert wird.

13. Verfahren nach Anspruch 12, dadurch gekennzeichnet, dass das Stabilisierungsmittel zusammen mit einer Reinigungslauge im Kreislauf auf der Unfiltratseite durch die Crossflow-Anlage umgepumpt und dabei gereinigt bzw. regeneriert wird, dass sodann das Stabilisierungsmittel im Kreislauf bleibt und die gebrauchte Lauge auf der Filtratseite abgefiltert wird und anschliessend nach dem Auffangen in einem separaten Behälter oder sofort mittels Crossflow-Nanofiltration von organischen und polyphenolischen Verbindungen gereinigt wird, während das Stabilisierungsmittel gespült und in die Einrichtung zum Dosieren des Stabilisierungsmittels geleitet wird.

14. Verfahren gemäss Anspruch 11, dadurch gekennzeichnet, dass das Stabilisierungsmittel nach der Filtration und Stabilisierung eines Getränks aus der Anlage in einen separaten Reinigungs- und Regenerations-Behälter geführt wird, wo Lauge zugegeben wird, die nach der Reinigung und Regeneration des Stabilisierungsmittels wieder abgetrennt wird und über die Crossflow-Membran-Filteranlage und eine nachgeschaltete Crossflow-Nanofilteranlage von organischen und polyphenolischen Verbindungen gereinigt wird.

15. Verfahren nach einem der Ansprüche 12 bis 14, dadurch gekennzeichnet, dass die Lauge über eine Mikrofiltrationsmembrane nach dem Crossflow-Prinzip mit einer Membran-Porenweite von 0,2 bis 100 µm, vorzugsweise von 0,6 bis 1,5 µm vorfiltriert wird, und dass sie sodann über die Nanofiltrationsmembrane nach dem Crossflow-Verfahren nachfiltriert und gereinigt wird.

16. Anlage (1) zur Durchführung des Verfahrens nach den Ansprüchen 11 bis 15, mit einem Crossflow-Filter (2) mit einer Mehrzahl von Filtrations-Membranen, die vom Getränk, d.h. vom Unfiltrat durchströmt werden, einer Anordnung (3, 19) zum Anführen des Filtrats, sowie einer Leitungs- (4) und Pumpenanordnung (5) zum Umpumpen des Unfiltrats im Kreislauf entlang den Membranen, welche Anordnung auf der Retentatseite der Membranen angeschlossen ist, und wenigstens einem Arbeitstank (13), von dem Unfiltrat den Membranen zuführbar ist, sowie durch eine Einrichtung (6, 6a) zur Dosierung des Stabilisierungsmittels, insbesondere PVPP, ins Unfiltrat, dadurch gekennzeichnet, dass wenigstens ein Lauge-Tank (7) vorgesehen ist, der mit der Anlage verbunden ist und aus dem nach Abschluss der Filtration und der Stabilisierung von Getränk, Lauge in das Crossflow-Filter (2) leitbar ist, um das PVPP in der Filteranlage zu reinigen und Schmutzstoffe zu lösen, und dass eine Leitung (3a) vorgesehen ist, mit der die Lauge gefiltert aus dem Crossflow-Filter (2) abgezogen und einem Behälter (25) zur Nachbehandlung und anschliessenden Behandlung in einem Crossflow-Nanofilter mit einem cut-off von 100 bis 2000, vorzugsweise 200 bis 500 Dalton, oder einer Anordnung zur Nachbehandlung mit Pumpen (8, 9), Rohrleitungen (10) und Crossflow-Nanofilter (11) mit einem cut-off von 100 bis 2000, vorzugsweise 200 bis 500 Dalton zuführbar ist.

17. Anlage nach Anspruch 16, dadurch gekennzeichnet, dass das Crossflow-Nanofilter (11) mit dem Lauge-Tank (7) verbunden ist.

## Claims

1. Method of cleaning caustic solution that has been contaminated by organic and/or polyphenolic compounds during a cleansing and/or a regeneration process in a foodstuff processing or filling method, wherein the caustic solution is filtered in crossflow-nanofiltration with a cut-off of 100 to 2000, preferably 200 to 500 Dalton and, with that, particles of organic and polyphenolic compounds are largely separated from the caustic solution.

2. Method according to claim 1, characterized in that, prior to nanofiltration, the caustic solution is subjected to prefiltration via a microfiltration membrane according to the crossflow principle, said microfiltration membrane possessing a pore width amounting to 0.2 to 100 µm, preferably 0.6 to 1.5 µm.

3. Method according to claim 2, characterized in that the microfiltration permeate (material passing through the filter) is supplied directly to the retentate (material retained by the filter) space of the nanofiltration.

4. Method according to one of the preceding claims, characterized in that the caustic solution is subjected to prefiltering with a static gauze or bag filter with a pore width of 1 to 500 µm.

5. Method according to one of the preceding claims, characterized in that the retentate from the nanofiltration is returned to a collector tank, the caustic solution to be filtered being located in said collector tank.

6. Method according to one of the claims 2 or 3, characterized in that the retentate from the microfiltration and the retentate from the nanofiltration are returned to a collector tank, the caustic filter to be filtered being located in said collector tank.

7. Method according to one of the claims 2 or 3, characterized in that, during filtration, the retentate from the prefiltration and the retentate from the nanofiltration are separately drawn off, continuously or disconcontinuously.

8. Method according to one of the preceding claims, characterized in that the caustic soda is subjected to filtration at a temperature of 10 to 90 °C, preferably between 30 and 60 °C.

9. Method according to one of the claims 1 to 8, characterized in that the filtration plant, and in particular the membranes, are preferably cleansed with an acidic cleansing solution after the caustic solution filtration.

10. Method according to claim 9, characterized in that, after cessation of cleansing, the acidic cleansing solution is used for neutralisation of the residual alkalinity in the retentate.

11. Method according to claim 1, characterized in that said caustic solution results from cyclic regeneration of polyvinylpolypyrrolidon (PVPP) which has been contaminated by organic and polyphenolic compounds during stabilisation and filtration of a beverage, in particular beer and fruit juice.

12. Method according to claim 11, characterized in that the stabilizer is cleansed and regenerated by caustic solution in a crossflow plant and that the contaminated caustic solution is prefiltered by crossflow filtration during or after cleansing of the stabilizer.

13. Method according to claim 12, characterized in that the stabilizer is circulated by a pump together with a cleansing caustic solution in a circuit on the non-filtrate side and, with that, is cleansed or regenerated, that then the stabilizer remains in the circuit and the used caustic solution is filtered off on the filtrate side and subsequently, after retention in a separate container or immediately by means of crossflow nanofiltration, is cleansed of organic or polyphenic compounds, while the stabilizer is rinsed and fed into the equipment for dosage of the stabilizer.

14. Method according to claim 11, characterized in that, after filtration and stabilisation of a beverage, the stabilizer is drawn off from the plant into a separate cleansing and regeneration container where caustic solution is added, said caustic solution being separated out again after cleansing and regeneration of the stabilizer and being cleansed of organic and polyphenolic compounds via the crossflow membrane filtration plant and a downstream crossflow nanofiltration plant.

15. Method according to one of the claims 12 to 14, characterized in that the caustic solution is prefiltered according to the crossflow principle via a microfiltration membrane with a pore width of 0.2 to 100 µm, preferably of 0.6 to 1.5 µm, and that then said caustic solution is refiltered and cleansed via the nanofiltration membrane according to the crossflow method.

16. Plant (1) for carrying out the method according to claims 11 to 15, with a crossflow filter (2) with a plurality of filtration membranes, said membranes being subjected to flow-through by the beverage, in other words by the non-filtrate, with an arrangement (3, 19) for drawing off the filtrate, as well as with a pipework (4) and pump (5) arrangement for circulating the non-filtrate in a circuit along the membranes by means of pumping, said arrangement being connected to the retentate side of the membranes and able to be fed to at least one working tank (13), from which working tank non-filtrate is able to be fed to the membranes, as well as through a device (6, 6a) for dosage of the stabilizer, in particular PVPP, into the non-filtrate, characterized in that at least one caustic solution tank (7) is provided, said caustic solution tank being connected to the plant and from which tank, after cessation of filtration and stabilising of the beverage, caustic solution is able be drawn off into the crossflow filter (2) in order to cleanse the PVPP in the filteration plant and release contaminants, and that a pipe (3a) is provided, with which pipe the caustic solution is drawn off, filtered, from the crossflow filter, and is able to be fed to a container (25) for retreatment and subsequent treatment in a crossflow nanofilter with a cut-off of 100 to 2000, preferably 200 to 500 Dalton, or to an arrangement for retreatment with pumps (8, 9), pipework (10) and crossflow nanofilter (11) with a cut-off of 100 to 2000, preferably 200 to 500 Dalton.

17. Plant according to claim 16, characterized in that the crossflow nanofilter (11) is connected to the caustic solution tank (7).

## Revendications

1. Procédé pour purifier de la lessive qui a été chargée de composés organiques et polyphénoliques lors d'une opération de nettoyage et/ou de régénération dans un procédé de traitement ou d'emballage d'aliments, selon lequel la lessive est filtrée selon le procédé de nanofiltration à courant transversal avec un seuil de coupure de 100 à 2000 Dalton, de préférence de 200 à 500 Dalton, et les particules de composés organiques et polyphénoliques sont largement séparées de la lessive.

2. Procédé selon la revendication 1, caractérisé en ce que la lessive, avant la nanofiltration, est pré-filtrée selon le principe du courant transversal par l'intermédiaire d'une membrane de microfiltration dont la largeur de pores est de 0,2 à 100 µm, de préférence de 0,6 à 1,5 µm.

3. Procédé selon la revendication 2, caractérisé en ce que le perméat de la microfiltration est amené directement dans l'espace de rétentat de la nanofiltration.

4. Procédé selon l'une des revendications précédentes, caractérisé en ce que la lessive est pré-filtrée à l'aide d'un filtre statique à tamis ou à sac d'une largeur de pores de 1 à 500 µm.

5. Procédé selon l'une des revendications précédentes, caractérisé en ce que le rétentat de la nanofiltration est ramené dans une cuve collectrice dans laquelle se trouve la lessive à filtrer.

6. Procédé selon la revendication 2 ou 3, caractérisé en ce que le rétentat de la microfiltration et celui de la nanofiltration sont ramenés dans une cuve collectrice dans laquelle se trouve la lessive à filtrer.

7. Procédé selon la revendication 2 ou 3, caractérisé en ce que le rétentat de la pré-filtration et celui de la nanofiltration sont évacués séparément de façon continue ou discontinue pendant la filtration.

8. Procédé selon l'une des revendications précédentes, caractérisé en ce que la lessive de soude est filtrée à une température de 10 à 90°C, de préférence entre 30 et 60°C.

9. Procédé selon l'une des revendications 1 à 8, caractérisé en ce que l'installation de filtration et en particulier les membranes sont purifiées de préférence à l'aide d'une solution de purification acide après la filtration de la lessive.

10. Procédé selon la revendication 9, caractérisé en ce que la solution de purification acide est utilisée, une fois la purification terminée, pour neutraliser l'alcalinité qui reste dans le rétentat.

11. Procédé selon la revendication 1, caractérisé en ce que ladite lessive est présente lors de la régénération de polyvinylpolypyrrolidone (PVPP), chargée de composés organiques et polyphénoliques, qui est utilisée lors de la stabilisation et de la filtration d'une boisson, en particulier de la bière et des jus de fruits.

12. Procédé selon la revendication 11, caractérisé en ce que le stabilisant est purifié par la lessive dans une installation à courant transversal, et en ce que la lessive chargée est pré-filtrée par filtration à courant transversal pendant ou après la purification du stabilisant.

13. Procédé selon la revendication 12, caractérisé en ce que le stabilisant circule par pompage, côté produit à filtrer, avec une lessive de purification dans l'installation à courant transversal tout en étant purifié et régénéré, et en ce que le stabilisant reste ensuite dans le circuit et la lessive usagée est filtrée côté filtrat puis est débarrassée, après avoir été recueillie dans un récipient séparé ou immédiatement, des composés organiques et polyphénoliques par nanofiltration à courant transversal, tandis que le stabilisant est rincé et ramené dans le dispositif prévu pour le dosage du stabilisant.

14. Procédé selon la revendication 1, caractérisé en ce que le stabilisant, après la filtration et la stabilisation d'une boisson, est amené de l'installation vers un récipient de purification et de régénération séparé où on ajoute de la lessive, laquelle est à nouveau séparée après la purification et la régénération du stabilisant et est débarrassée des composés organiques et polyphénoliques grâce à l'installation de filtration à membrane à courant transversal et à une installation de nanofiltration à courant transversal montée en aval.

15. Procédé selon l'une des revendications 12 et 14, caractérisé en ce que la lessive est pré-filtrée grâce à une membrane de microfiltration, selon le principe du courant transversal, avec une largeur de pores de membrane de 0,2 à 100 µm, de préférence de 0,6 à 1,5 µm, et en ce qu'elle est ensuite refiltrée et purifiée grâce à la membrane de nanofiltration selon le procédé du courant transversal.

16. Installation (1) pour la mise en oeuvre du procédé selon les revendications 11 à 15, comportant un filtre à courant transversal (2) pourvu de plusieurs membranes de filtration qui sont traversées par la boisson, c'est-à-dire par le produit à filtrer, un dispositif (3, 19) pour évacuer le filtrat, un dispositif de conduite (4) et de pompe (5) pour faire circuler le produit à filtrer le long des membranes, lequel dispositif est raccordé au côté rétentat des membranes, au moins une cuve de travail (13) à partir de laquelle le produit à filtrer peut être amené vers les membranes, et enfin un dispositif (6, 6a) pour le dosage du stabilisant, en particulier du PVPP, dans le produit à filtrer,
caractérisée en ce qu'il est prévu au moins une cuve de lessive (7) qui est reliée à l'installation et à partir de laquelle la lessive peut être amenée dans le filtre à courant transversal (2), une fois que la filtration et la stabilisation de la boisson sont terminées, afin de purifier la PVPP dans l'installation de filtration et de dissoudre les saletés,
et en ce qu'il est prévu une conduite (3a) grâce à laquelle la lessive peut être évacuée, une fois filtrée, du filtre à courant transversal (2) et amenée dans un récipient (25) en vue d'un retraitement et d'un traitement consécutif dans un nanofiltre à courant transversal présentant un seuil de coupure de 100 à 2000, de préférence de 200 à 500 Dalton, ou dans un dispositif pour le retraitement comportant des pompes (8, 9), des canalisations (10) et un nanofiltre (11) présentant un seuil de coupure de 100 à 2000, de préférence de 200 à 500 Dalton.

17. Installation selon la revendication 16, caractérisé en ce que le nanofiltre à courant transversal (11) est relié à une cuve de lessive (7).
